# EUROPEAN PATENT SPECIFICATION

(11) **EP 2 723 187 B1**
(45) Date of publication and mention of the grant of the patent: **25.03.2015**
(21) Application number: 12721871.7
(22) Date of filing: 22.05.2012
(51) Int. Cl.: A23G 9/50, A21D 13/00, A21D 17/00, A21C 15/02, A23L 1/00, A23P 1/10, A23L 1/025

(54) **EDIBLE RECEPTACLES FOR FROZEN CONFECTIONS**
ESSBARE BEHÄLTER FÜR GEFRORENE SÜßWAREN
RÉCEPTACLES COMESTIBLES POUR DES CONFISERIES CONGELÉES

(30) Priority: 21.06.2011 EP 11170694; 21.06.2011 EP 11170693
(43) Date of publication of application: 30.04.2014
(73) Proprietor: Unilever PLC, London, Greater London EC4Y 0DY (GB); Unilever N.V., 3013 AL Rotterdam (NL)
(72) Inventor: BARTKOWSKA, Beata, Bedford Bedfordshire MK44 1LQ (GB); LUCK, Richard, Henry, Bedford Bedfordshire MK44 1LQ (GB); SUN, Lina, Shanghai 200335 (CN); NOBLE, Deborah, Jane, Bedford Bedfordshire MK44 1LQ (GB)
(74) Representative: Warner, Guy Jonathan
(86) International application number: PCT/EP2012/059486
(87) International publication number: WO 2012/175266

(56) References cited:
- EP-A1- 1 283 012
- EP-A1- 1 302 112
- WO-A1-92/10938
- WO-A1-03/020051
- DE-U1- 9 308 730
- US-A- 2 255 506
- US-A1- 2005 142 274

## Description

### Technical Field of the Invention

The present invention relates to non-baked wafer-like materials that can be used as edible receptacles for frozen confections, and methods for producing them.

### Background to the Invention

Ice cream cone products, such as Cornetto™ are popular and well-known. These products typically consist of a wafer cone filled with ice cream. The wafer cones are made from a batter which is composed largely of flour, sugar, fat/oil and water. The batter is baked on a plate. During baking, most of the water in the batter is driven off as steam. Immediately after baking the wafers are flexible which allows them to be shaped, e.g. to form a rolled cone from the flat sheet. The cone is then inserted into a cone sleeve. To prevent the wafer from becoming soggy by absorbing water from the ice cream, the inside of the cone is usually sprayed with a fat-based coating (such as chocolate) to form a moisture barrier. Finally, the cone is filled with ice cream on top of which sauces or pieces of biscuit, nut or fruit are dispensed to provide an attractive appearance to the product.

However, consumers are continually looking for new eating experiences, and conventional cones may be perceived as somewhat old-fashioned and uninteresting. For example, the cones themselves do not have much flavour. Therefore there have been attempts to make cones from other materials. EP 1 719 413 discloses a cone made from particles of cooked biscuit material bound together with a cocoa butter equivalent fat. Whilst this provides a different type of cone, it nonetheless has some drawbacks; in particular the use of a cocoa butter equivalent fat as a binder is undesirable since due to health concerns there is an increasing demand for products which contain reduced amounts of fat and calories.

Other attempts for providing pre-baked biscuit-based ice-cream cones are disclosed in EP 1302112 A1, EP 1283012 A1 and US 2005/0142274 A1. Ultrasonic processing of pre-baked food products and/or food products rework is known from WO 03/020051 A1.

Thus there remains a need for cones that are made from new materials such as cooked baked material yet that do not require high levels of undesirable binders.

### Brief Description of the Invention

We have now found that edible receptacles, such as cones, can be produced from particles of dry baked material without the need for high levels of binder, provided that the baked material has particular properties and provided that a particular technique is used when the edible receptacles are formed. Accordingly, in a first aspect, the present invention provides an edible receptacle suitable for containing a frozen confection wherein the receptacle comprises from 0.01 wt% to 15 wt% binder and at least 50 wt% of particles of dry baked material by weight of the edible receptacle and wherein the particles have an average diameter of from 0.001 to 5mm and a water content of at most 5wt%.

These receptacles solve a number of problems with previously known edible receptacles. In particular, they do not contain high levels of additional fats and sugars as binders yet they maintain their structure once formed, during storage in the factory, during filling with frozen confection, in the supply chain and during storage prior to consumption. Furthermore, they provide a new and unusual texture and appearance to the consumer.

Preferably the receptacle contains at least 70wt% of particles of dry baked material by weight of the receptacle, more preferably at least 85wt%, more preferably still at least 90wt%, yet more preferably still at least 95%, most preferably at least 97.5wt%.

Preferably the receptacle comprises less than 10 wt% of binder, more preferably the receptacle comprises less than 5wt%, more preferably still less than 1 wt%, yet more preferably still less than 0.05wt%.

Preferably the particles of dry baked material have an average diameter of from 0.01 to 3 mm, more preferably from 0.05 to 2 mm, more preferably still from 0.1 to 1 mm.

Preferably the particles of dry baked material have a water content of at most 4wt% by weight of the particles, more preferably at most 3wt%, more preferably still at most 2 wt%, most preferably at most 1 wt%.

Preferably the receptacle comprises up to 35 wt% of other particulate edible material of from 1 to 5 mm in size.

Preferably the other particulate edible material is selected from seeds, cereals, fruit pieces, chocolate chips and mixtures thereof.

Preferably the edible receptacle is a cone.

Preferably the edible receptacle has a wall thickness of from 1 to 10mm, more preferably from 2 to 7mm, more preferably still from 3 to 5mm.

Preferably the edible receptacle has a mass of from 5 to 80g, more preferably from 7.5 to 40g, more preferably still from 10 to 20g.

Due to the very low levels of binder, if an edible receptacle comprising the ingredients according to the first aspect of the invention are made using standard techniques and apparatus, such as mere pressure-forming, they are very unstable and fragile. In many cases they cannot be formed into the desired shape at all. However, we have now found that edible receptacles comprising large levels of particles of dry baked material and very low levels of binder can be made provided that ultrasonic forming is used. Accordingly, in a second aspect, the present invention provides a process for preparing an edible receptacle according to the first aspect, the process comprising the steps of:
(a) dosing a required amount of edible receptacle ingredients into a support mould, the ingredients comprising from 0.01 wt% to 15 wt% binder and at least 50 wt% of particles of dry baked material wherein the particles have an average diameter of from 0.001 to 5mm and a water content of at most 5wt%;
(b) inserting a shaping tool into the ingredients in the support mould; and
(c) vibrating the shaping tool at an ultrasonic frequency to form the ingredients into an edible receptacle of the desired shape.

Preferably the receptacle is frozen shortly after step (c), more preferably within 1 min of step (c), more preferably still within 30 seconds, yet more preferably still within 10 seconds. We have found that forming the receptacle and then subsequently freezing it causes the shape to be retained even better that without this step. More preferably the frozen confection is filled into the receptacle shortly after step (c), which thereby cools and starts to freeze the receptacle.

Preferably the support mould contains packaging material, so that in step (a), the edible receptacle ingredients are dosed directly into the packaging material and so that the receptacle is formed inside the packaging material.

In a third aspect, the present invention provides a composite frozen confection product which comprises an edible receptacle according the first aspect of the invention and a frozen confection.

In a fourth aspect, the present invention provides a process for manufacturing a composite frozen confection according to the third aspect of the invention, the process comprising dispensing a frozen confection into an edible receptacle according to the first aspect of the invention.

### Brief Description of the Drawings

Figure 1 shows a cross section of the support mould containing packaging material partially filled with edible receptacle ingredients.
Figure 2 shows a cross section of the support mould with the packaging material filled with required amount of edible receptacle ingredients with a pre-forming tool present.
Figure 3 shows a cross section of the support mould in which the edible receptacle ingredients have been optionally pre-formed.
Figure 4 shows the ultrasonic tool forming the ingredients into the desired shape of the edible receptacle within the packaging material.

### Detailed Description of the Invention

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003.

The receptacles according to the invention are preferably in the form of a cone or a cup, but they may be any shape suitable for use in a composite frozen product. For example they may have a polygonal cross-section, such as a triangle, square, rectangle or hexagon. We have found that receptacles produced according to the invention are very robust, even when they have corners (e.g. a receptacle with a square or rectangular cross-section). Additionally the receptacle may be substantially flat, in the shape of a traditional ice cream wafer product such as those used to sandwich a frozen composition between. In a particularly preferred embodiment the edible receptacle is in the form of a crust. In this embodiment the edible receptacle is formed within a typical ice cream container, for example using the process described below, and a frozen composition is then added into the crust within the container. Additionally, a separate sheet of the edible receptacle of the invention can be added to the top of this embodiment to form a crust topping. Such an embodiment would provide the consumer with a novel product in the form of an ice cream pie.

As used herein, the term "dry baked material" means a food product which is produced by baking a mix (dough) comprising flour and water, and optionally other ingredients such as sugars and fats / oils. Dry baked materials are typified by biscuits and have a moisture content of less than 5 wt%, e.g. about 2 wt% and a close-knit structure with little aeration. Water content can be measured using standard techniques such as drying a known volume and weight of a product drying oven and comparing the weight and volume before and after drying.

A typical pre-mix for a dry baked material comprises 20-55%, preferably 25-40% flour, 5-50%, preferably 10 to 30% sugar, 1-20%, preferably 1-10% fat, 0-10%, preferably 2-7% egg and / or milk solids and 5-30%, preferably 10-30% water. Fats / oils that may be used include coconut oil, palm oil, palm kernel oil, cocoa butter, milk fat, sunflower oil, safflower oil, olive oil, linseed oil, soybean oil, rapeseed oil, and mixtures, fractions or hydrogenates thereof. Sugars that may be used include simple sugars such as sucrose, fructose, lactose, and dextrose; corn / glucose syrups and invert sugar. In addition, the dry baked material may contain other ingredients conventionally found in such products, such as starch, salt, flavours, colours (e.g. caramel), cocoa powder, inulin, emulsifiers (e.g. lecithin), stabilisers, preservatives and inclusions such as pieces of nuts, fruit and chocolate. Water is an important component of the mix because it allows the starch to gelatinize during baking and allows the mix to be blended but much, if not substantially all of the water is driven off during baking, so that the water content of the resulting dry baked material is at most 5wt%. Hence the amounts of the other ingredients in the final dry baked products can be proportionately higher.

Due to its formulation, structure and water content, the dry baked material is very frangible and prone to breakage and crumbling. Thus hard biscuits and cookies are suitable since they are normally baked for long enough such that they become crisp and dry and have a water content at most 5wt%. Conversely, cakes, sponges, brownies, soft cookies and the like which are baked to be soft and moist in the centre are not suitable for this invention. Additionally, due to the specific processing conditions required to form the products of the invention cereals such as oat grains, rice grains, wheat grains and puffed grain material such as puffed rice (rice crispies), puffed wheat (sugar puffs), and the like are not suitable and are not considered to be dry baked material.

The particles of the dry baked material have an average diameter of from 0.001 to 5 mm, preferably from 0.01 to 3 mm, more preferably from 0.05 to 2 mm, more preferably still from 0.1 to 1 mm. The particles may have heterogeneous shapes, sizes, volumes, surface areas and so on. Particles may be circular, non-circular or a mixture thereof. In some preferred embodiments, the particles are substantially spherical. As used herein, the term diameter refers to the maximum length of the particles in any dimension. For particles having an irregular shape, the diameter is the length of the longest cross section that can be cut through the body of the particle. When the diameter of particles is referred to it is meant that at least 90% by number of the particles have that diameter. The particles of the dry baked material may be obtained from larger pieces of baked material, for example by crushing or breaking. The edible receptacle contains at least 50wt%, preferably at least 70wt%, more preferably at least 85 wt%, more preferably still at least 90wt%, yet more preferably still 95wt%, most preferably 97.5wt% of particles of dry baked material by weight of the receptacle. In a most preferred embodiment the edible receptacle is almost entirely formed from the particles of dry baked material.

In addition to the essential components, the receptacle can also contain up to about 35% of a mixture of other particulate edible pieces such as seeds, cereals, fruit pieces, chocolate chips and the like. These have an average diameter from 1 to 5 mm, preferably from 1.5 to 2.5 mm.

As used herein, the term "binder" means a substance which is used to stick pieces of dry baked material together. Binders are typically based on fats or viscous sugar solutions. Suitable fats include butter, coconut oil, palm oil, canola oil, soya bean oil, sunflower oil and olive oil. Due to the use of ultrasonic forming the amount of binder required is far less than that used previously. Consequently the receptacle contains less than 15 wt% binder by weight of the receptacle, preferably less than 10 wt% of binder, more preferably less than 5wt%, more preferably still less than 0.5 wt%, more preferably still at most 0.05wt% binder. We have found that a certain amount of binder is necessary to allow the receptacles to be formed such that they have the desired product characteristics and stability. Accordingly the receptacle contains at least 0.01 wt% binder by weight of the receptacle, preferably at least 0.02 wt%. Dry baked material often inherently contains ingredients such as fats or sugars. However, these ingredients have been subjected to baking conditions and are integral to the structure of the dry baked material itself. As such, these ingredients are not available to function as binders in the sense of this invention and the level of additional binder is understood to not include any other similar material that is already present in the dry baked material.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, milk ice, water ice, frozen yoghurt and the like. They typically have an overrun of from 20 and 150%, preferably from 40 to 120%. The frozen confection may be ice cream, sherbet, sorbet, water ice or frozen yoghurt.

Frozen confections can be combined with the edible receptacles to form composite frozen confections that benefit from the unique organoleptic properties of the edible receptacles yet that do not suffer from the high levels of binder that were previously thought necessary.

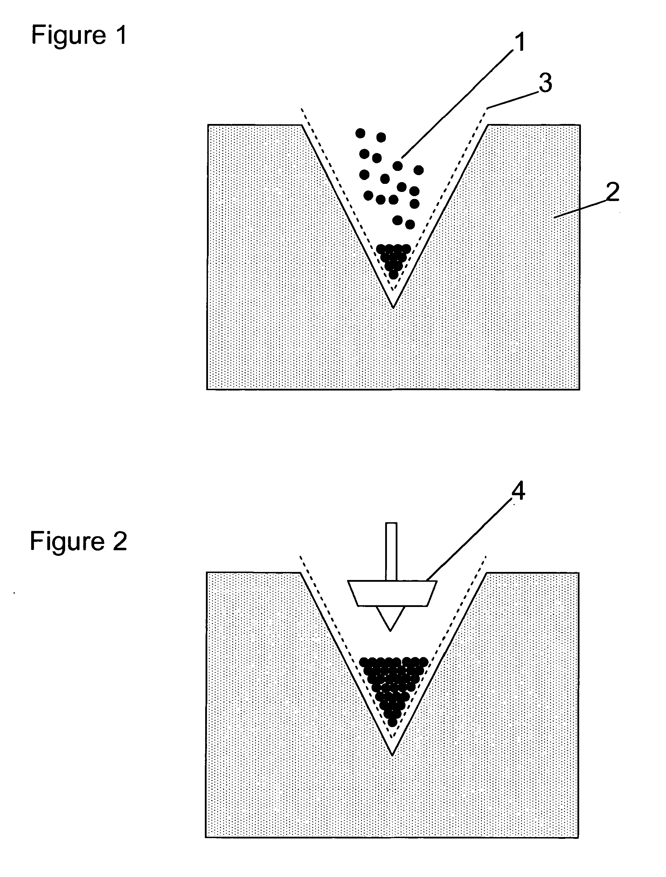

The invention will be further described with reference to Figures 1 to 4 which show a schematic illustration of the process of the invention by which the receptacle is produced from the particles of dry baked material.

Firstly, as shown in Figure 1, the required amount of edible receptacle ingredients 1 is placed into a support (female) mould 2. The edible receptacle ingredients are as described above and contain the particles of dry baked material and a small amount of binder. They may also include the additional components described above. The support mould may contain packaging material 3 which preferably corresponds to the shape of the mould (such as a conventional cone sleeve when the receptacle is a cone). The packaging sleeve may be made from paper, paper/aluminium or a suitable plastic packaging material. In alternative embodiments, the packaging material could be a cardboard cone, a cardboard ice cream container or any other shape of form of container for which a corresponding mould can be formed and that will allow a forming element to be inserted to form the edible receptacle. By forming the receptacle inside the packaging, there is no need for a separate, subsequent step of placing the receptacle in the sleeve. The edible receptacle ingredients may, for example, be dosed by means of a volumetric head or a screw conveyor. The size of the receptacle formed can be varied without changing the mould by simply changing the dosing weight of material.

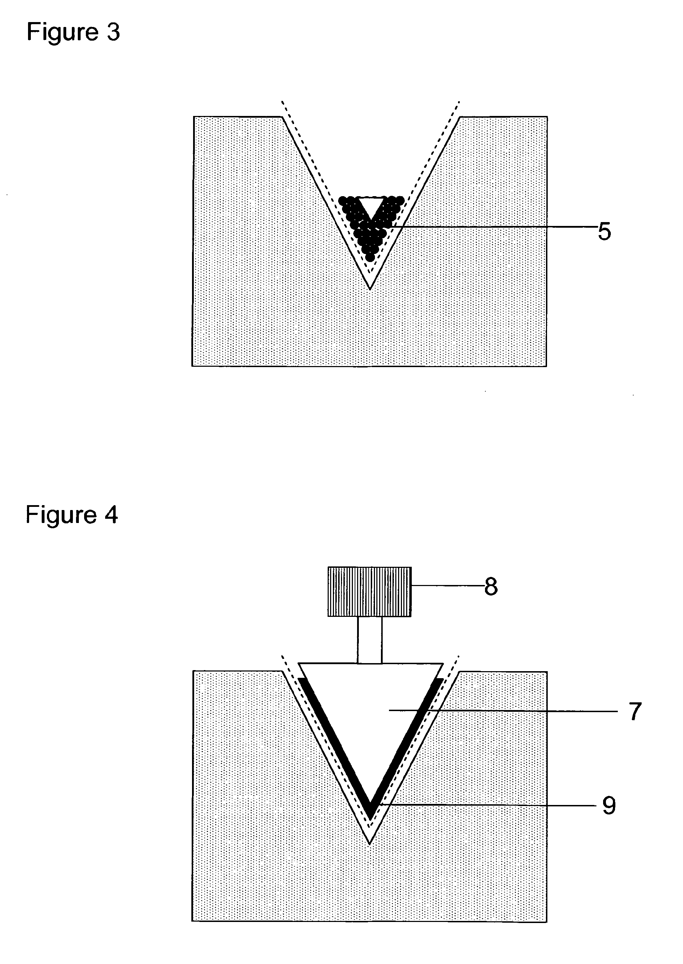

In an optional step in the process, shown in Figure 2, a pre-forming tool which preferably corresponds to the shape of the support mould but with a truncated tip is used to ensure that the particles are located in the bottom of the mould. For example, when the support mould is conical, the compacting tool is frusto-concial. The particles then settle at the bottom of the mould and take up the external shape of the receptacle (corresponding to the internal shape of the mould). The pre-forming tool may also have a small pointed protrusion which makes a small depression in the ingredients of the receptacle as shown by element 5 of figure 3. We have found that this facilitates the next step in the process in which the receptacle is shaped. The tool is typically at room temperature and is typically applied for a short period of time, such as about 1 second.

As shown in Figure 4, a shaping tool 7 (male mould) connected to an ultrasonic device 8 is inserted whilst the edible receptacle ingredients are still in the support (female) mould. The ultrasonic device 8 is activated and vibrates the shaping tool 7 at a frequency of from 20 to 500 kHz, preferably 50 to 400 kHz, more preferably 100 to 200 kHz and at a pressure of from 30 to 90 bar, more preferably from 45 to 75 bar, more preferably from 55 to 65 bar. Such shaping tools and ultrasonic devices are available from Southfork Innovations Ltd, Dale Road, Sheriff Hutton Industrial Park, York Road, Sheriff Hutton, York. YO60 6RZ. The edible receptacle ingredients are compressed and are displaced up the sides of the mould. The ultrasonic shaping tool thus forms the ingredients into the receptacle with the desired size, thickness and internal shape. The amount of material dosed into the cone is chosen accordingly. The shaping tool is typically at ambient temperature when used, but may if desired be warmed. The shaping tool is typically held in place for a short period time of time, such as 0.5 - 10 seconds. In order to help to release the shaping tool from the receptacle, the shaping tool may be twisted as it is removed which helps it to de-mould from the receptacle.

The particles of dry baked material are surprisingly fused together by the ultrasonic vibration applied during forming thereby to form into a receptacle 9, for example a cone. Finally the receptacle is removed from the mould and may be frozen. The receptacle may then be coated with a fat-based coating material, such as chocolate, at least on its inner surface, if desired. Preferably the receptacle is filled with a frozen confection shortly after the cone has been formed, such as within 30 seconds, preferably within 10 seconds. This cools the receptacle and freezes it. Alternatively, the receptacle can be frozen without being filled with a frozen confection, e.g. by blast freezing, and then stored and subsequently filled with a frozen confection. Due to the use of ultrasonic forming the receptacle possesses the required firmness and stability during storage and consumption so that it maintains its shape even though it is formed from dry material with very low levels of binder.

The frozen confection used to fill the receptacle may comprise two or more different colours / flavours / types which are co-extruded and may contain sauces and / or inclusions (such as pieces of fruit, nut, chocolate, biscuit etc). After filling, the top of the product may be decorated, e.g. with a sauce and / or pieces of fruit, nut, chocolate etc. Finally the product may be packaged (e.g. if the product was formed in a cone sleeve, a lid may then placed on top and the sleeve sealed).

The edible receptacles have a number of advantages over conventional wafer cones, whilst retaining the necessary dryness to touch and robustness on storage and after temperature abuse. Firstly, they provide a new eating experience, for example a different texture, especially when pieces of e.g. fruit, chocolate or other inclusions are incorporated in the receptacle. They also have an attractive, artisanal appearance in contrast to the plain, homogenous appearance of wafer cones. Secondly, they can be made with a simple process from pre-baked pieces, so that baking is not required in the ice cream factory. Moreover, they can be manufactured inside their packaging whereas conventional wafer cones and other edible receptacles must be placed within the packaging after they have been formed. Thirdly, the ultrasonic forming ensures that very low levels of binder are required. Binders typically contain significant amounts of fat and / or sugars, so the reducing the amount of a binder gives nutritional benefits (i.e. less fat/sugar) and also taste improvements (the receptacle is not excessively sweet and keeps the original flavour of its component pieces).

The present invention will now be further described with reference to the following examples which are illustrative and not limiting.

### Examples

In order to demonstrate the effectiveness of the use of ultrasonic forming in the production of edible receptacles comprising particles of dry baked material various different materials were assessed for their ability to be formed. The dry baked products according to the invention were digestive biscuits (obtained from Sainsbury's supermarket, UK) and Original Graham Crackers (manufactured by Nabisco, US). In order to assess the performance of other products the following materials were also assessed: Black sesame seeds (whole); and Rice Pops (a puffed rice breakfast cereal). These materials were sourced from Sainsbury's supermarket, UK.

### Water content

The water content of each material was determined using a CEM, Smart System 5, Microwave Moisture Analyzer set to the following parameters: Power: 100%; Delta weight: 0.1g; Delta time: 2 seconds; Max time: 10 minutes; Max temp: 100°C; Minimum weight: 1g; Maximum weight: 4g. Each type of material was crushed, 1.2g of the sample was spread across square, absorbent sample pads (supplied by CEM) and placed into the moisture analyzer which was then closed and activated to perform analysis. The analysis was performed three times for each material and the average water content of the materials is shown in table 1 where it can be seen that the water content of all the materials was less than 5 wt%.

**Table 1 - average water content**

| **Material** | **Average water content** (wt%) |
|---|---|
| Digestive Biscuits | 1.68 |
| Graham Cracker | 1.93 |
| Poppy Seeds | 1.65 |
| Rice Pops | 1.73 |

### Particle sizes

The different materials were made into particulate form by blending in a domestic food processor on maximum power until a consistent texture was achieved. Each material was tested for particle size using test sieves at 0, 1.25um, 1 mm, 2mm, 2.8mm, 4mm, 4.75mm and 6.7mm. Each sieve was weighed using digital scales and set up in order of largest sieve size through to smallest. 50g of each material sample was added to the top sieve and filtered down through the sieves according to particle size. The sieves were then re weighed to determine the weight of sample on each sieve. The % material on each sieve was calculated to determine the size of particles within the sample as shown in Table 2.

**Table 2 - Size range of particles in mm, total amount for each product in wt%.**

| | **Proportion of particles (wt%) in size ranges (mm)** | | | | | | | |
|---|---|---|---|---|---|---|---|---|
| **Product** | **0 to 0.00125** | **>0.00125 to 1** | **>1 to 2** | **>2 to 2.8** | **>2.8 to 4** | **>4 to 4.75** | **>4.75 to 6.7** | **>6.7** |
| Digestive Biscuits | 0.0 | 61.0 | 28.7 | 7.9 | 1.8 | 0.6 | 0.0 | 0.0 |
| Graham Cracker | 0.0 | 74.1 | 19.0 | 6.1 | 1.1 | 0.0 | 0.0 | 0.0 |
| Poppy Seeds | 0.0 | 0.0 | 99.4 | 0.6 | 0.0 | 0.0 | 0.0 | 0.0 |
| Rice Pops | 0.4 | 1.0 | 0.0 | 0.0 | 7.5 | 30.6 | 60.5 | 0.0 |

### Varying amount of binder

In order to assess how well ultrasonic forming performed in the absence of binder and over a range of different levels of binder the mixes as set out in table 3 were prepared. In these mixes an exemplar binder (Coconut oil) was added in levels of 0%, 5%, 10%, 15%, 20% and 30% of the total sample weight and blended with the particles of the products.

**Table 3 - Sample formulations**

| **Product** | **Ingredients** | **Ingredients (wt%)** | | | | | |
|---|---|---|---|---|---|---|---|
| Digestive Biscuits | Dry particles | 100 | 95 | 90 | 85 | 80 | 70 |
| | Binder | 0 | 5 | 10 | 15 | 20 | 30 |
| Graham Cracker | Dry particles | 100 | 95 | 90 | 85 | 80 | 70 |
| | Binder | 0 | 5 | 10 | 15 | 20 | 30 |
| Poppy Seeds | Dry particles | 100 | 95 | 90 | 85 | 80 | 70 |
| | Binder | 0 | 5 | 10 | 15 | 20 | 30 |
| Rice Pops | Dry particles | 100 | 95 | 90 | 85 | 80 | 70 |
| | Binder | 0 | 5 | 10 | 15 | 20 | 30 |

### Product forming using ultrasonic and standard forming

The samples of table 3 were subjected to both ultrasonic and standard forming methods. Ultrasonic forming was carried out using an ultrasonic bench top unit with a shaped anvil and sonotrode, (Southfork Innovations Ltd, Dale Road, Sheriff Hutton Industrial Park. York Road. Sheriff Hutton. York. YO60 6RZ) attached to a pointed cone-shaped former. 18g of each sample were added to individual cone-shaped wrappers which were placed in cone-shaped moulds. The cone-shaped former was lowered into the samples in the mould at an apparatus air pressure of 60bar. The sonotrode was set to a frequency of 20kHz and was activated for a period of approximately 0.2 seconds.

For the non-ultrasonic forming, a bench top drill press with attached cone shaped former and anvil was used. In this process, 18g of each sample were again added to individual cone-shaped wrappers which were placed in cone-shaped moulds. The bench top drill press was operated to lower the cone-shaped former into the samples in the mould at a pressure of about 100bar.

All the products were inspected immediately after forming to assess whether they had formed into the desired cone shape. The products were then left at room temperature for 24 hours before being frozen at -25°C for approximately 24 hours. Cone formation and stability was analysed as follows. Immediately after forming, lower and upper cone formation was assessed visually, loose material was not considered as a formed cone. The height of the formed cones from the top of the packaging (measured along the package seam) and the thickness of the walls of the formed cone were measured using digital callipers. The cones were then inverted over digital scales to weigh loose, unformed material. Cone stability was assessed by rolling the cone between the hands five times, wherein unstable cones were found to break into pieces. The stability of the cones was also assessed visually after they had beed left at room temperature for 24 hours after forming, and after they had been subsequently stored in the -25°C freezer for a further 24 hours.

### Results

It was found that poppy seed cones made with ultrasonic forming were unstable. Additionally, it was found that poppy seed cones could not be formed at all using the non ultrasonic apparatus. The pressure required was greater that the apparatus was able to generate.

Rice pops were unsuitable as a material for making the edible receptacles of the invention. When subjected to both ultrasonic and non ultrasonic forming they were crushed to a fine powder. Neither the standard apparatus not the ultrasonic apparatus could be used to make cones from rice pops, irrespective of whether binder is present or not.

The standard (non-ultrasonic) forming apparatus was unable to form cones from the biscuit and cracker material, even at the higher levels of binder. The cones were found to be unstable at low levels of binder or too sticky to be removed from the forming tool at higher levels of binder. Conversely, when ultrasonic forming was used with both the biscuit and the cracker material the cones comprising the particles of dry baked material were able to form robust cones, that could be easily removed from the forming tool, and that were stable over significant periods of time (24hrs) at ambient (room) temperature and even survived the process of being stored at -25°C. Furthermore, these cones were stable even with levels of binder at 15% and below.

In conclusion, we have found that certain material, namely particles of dry baked material such as biscuits and crackers can be used to form non-baked edible receptacles suitable for frozen confections and furthermore, this material can be used to form stable edible receptacles even with very low levels of binder present provided that they are manufactured using ultrasonic forming.

The various features and embodiments of the present invention, referred to in individual sections above apply, as appropriate, to other sections, mutatis mutandis. Consequently features specified in one section may be combined with features specified in other sections, as appropriate.

## Claims

1. An edible receptacle suitable for containing a frozen confection wherein the receptacle comprises from 0.01 wt% to 15 wt% binder and at least 50 wt% of particles of dry baked material by weight of the edible receptacle and wherein the particles have an average diameter of from 0.001 to 5mm and a water content of at most 5wt%.

2. An edible receptacle according to claim 1 comprising less than 10 wt% of binder.

3. An edible receptacle according to any of the preceding claims wherein the receptacle contains at least 60 wt% of particles of dry baked material by weight of the receptacle.

4. An edible receptacle according to any of the preceding claims wherein the particles of dry baked material have an average diameter of from 0.01 to 3 mm.

5. An edible receptacle according to any of the preceding claims wherein the particles of dry baked material have a water content of at most 4wt% by weight of the particles.

6. An edible receptacle according to any of the preceding claims wherein the receptacle comprises up to 35 wt% of other particulate edible material of from 1 to 20 mm in size.

7. An edible receptacle according to any of the preceding claims wherein the other particulate edible material is selected from seeds, cereals, fruit pieces, chocolate chips and mixtures thereof.

8. An edible receptacle according to any of the preceding claims wherein the edible receptacle is a cone.

9. An edible receptacle according to any of the preceding claims wherein the edible receptacle has a wall thickness of from 1 to 10mm.

10. An edible receptacle according to any of the preceding claims wherein the edible receptacle has a mass of from 5 to 80g.

11. A process for preparing an edible receptacle according to any of claims 1 to 10, the process comprising the steps of:
(a) dosing a required amount of edible receptacle ingredients into a support mould, the ingredients comprising from 0.01 wt% to 15 wt% binder and at least 50 wt% of particles of dry baked material wherein the particles have an average diameter of from 0.001 to 5mm and a water content of at most 5wt%.
(b) inserting a shaping tool into the ingredients in the support mould; and
(c) vibrating the shaping tool at an ultrasonic frequency to form the ingredients into an edible receptacle of the desired shape.

12. A process according to claim 11 wherein the receptacle is frozen shortly after step (c), preferably within 1 min of step (c).

13. A process according to claim 11 or 12 wherein the support mould contains packaging material in to which the edible receptacle ingredients are dosed.

14. A composite frozen confection product which comprises an edible receptacle according to any of claims 1 to 10 and a frozen confection.

15. A process for manufacturing a composite frozen confection according to claim 14 wherein the process comprises dispensing a frozen confection into an edible receptacle according to any of claims 1 to 10.

## Patentansprüche

1. Essbarer Behälter, der für die Aufnahme von gefrorenem Konfekt geeignet ist,
wobei der Behälter 0,01 bis 15 Gew.-% Bindemittel und mindestens 50 Gew.-% Teilchen von trockenem gebackenem Material aufweist, und zwar auf das Gewicht des essbaren Behälters bezogen, und wobei die Teilchen einen mittleren Durchmesser von 0,001 bis 5 mm und einen Wassergehalt von höchstens 5 Gew.-% aufweisen.

2. Essbarer Behälter nach Anspruch 1,
der weniger als 10 Gew.-% Bindemittel aufweist.

3. Essbarer Behälter nach einem der vorstehenden Ansprüche,
wobei der Behälter mindestens 60 Gew.-% Teilchen von trockenem gebackenem Material enthält, und zwar auf das Gewicht des Behälters bezogen.

4. Essbarer Behälter nach einem der vorstehenden Ansprüche,
wobei die Teilchen des trockenen gebackenen Materials einen mittleren Durchmesser von 0,01 bis 3 mm aufweisen.

5. Essbarer Behälter nach einem der vorstehenden Ansprüche,
wobei die Teilchen des trockenen gebackenen Materials einen Wassergehalt von höchstens 4 Gew.-% aufweisen, und zwar auf das Gewicht der Teilchen bezogen.

6. Essbarer Behälter nach einem der vorstehenden Ansprüche,
wobei der Behälter bis zu 35 Gew.-% anderes teilchenförmiges essbares Material mit eine Größe von 1 bis 20 mm aufweist.

7. Essbarer Behälter nach einem der vorstehenden Ansprüche,
wobei das andere teilchenförmige essbare Material aus Samen, Zerealien, Fruchtstücken, Schokoladenstücken und Gemischen davon ausgewählt ist.

8. Essbarer Behälter nach einem der vorstehenden Ansprüche,
wobei der essbare Behälter ein Konus ist.

9. Essbarer Behälter nach einem der vorstehenden Ansprüche,
wobei der essbare Behälter eine Wanddicke von 1 bis 10 mm aufweist.

10. Essbarer Behälter nach einem der vorstehenden Ansprüche,
wobei der essbare Behälter eine Masse von 5 bis 80 g hat.

11. Verfahren zum Herstellen eines essbaren Behälters nach einem der Ansprüche 1 bis 10,
wobei das Verfahren die folgenden Schritte aufweist:
(a) Dosieren der erforderlichen Menge der Bestandteile des essbaren Behälter in eine Trägerform, wobei die Bestandteile 0,01 bis 15 Gew.-% Bindemittel und mindestens 50 Gew. % Teilchen von trockenem gebackenem Material aufweisen, wobei die Teilchen einen mittleren Durchmesser von 0,001 bis 5 mm und einen Wassergehalt von höchstens 5 Gew. % haben,
(b) Einführen eines Formwerkzeugs in die Bestandteile in der Trägerform; und
(c) Rütteln des Formwerkzeugs mit Ultraschallfrequenz, um die Bestandteile zu einem essbaren Behälter mit der gewünschten Form zu formen.

12. Verfahren nach Anspruch 11,
wobei der Behälter kurz nach dem Schritt (c), vorzugsweise innerhalb 1 Minute des Schrittes (c), gefroren wird.

13. Verfahren nach Anspruch 11 oder 12,
wobei die Trägerform ein Verpackungsmaterial enthält, in das die Bestandteile des essbaren Behälters dosiert werden.

14. Zusammengesetztes gefrorenes Konfektprodukt, das einen essbaren Behälter nach einem der Ansprüche 1 bis 10 und ein gefrorenes Konfekt aufweist.

15. Verfahren zum Herstellen eines zusammengesetzten gefrorenen Konfektes nach Anspruch 14,
wobei das Verfahren das Abgeben eines gefrorenen Konfekts in einen essbaren Behälter nach einem der Ansprüche 1 bis 10 aufweist.

## Revendications

1. Réceptacle comestible approprié pour contenir une confiserie glacée, dans lequel le réceptacle comprend de 0,01 % en poids à 15 % en poids de liant et au moins 50 % en poids de particules de matériau cuit sec en poids du réceptacle comestible et dans lequel les particules présentent un diamètre moyen de 0,001 à 5 mm et une teneur en eau d'au plus 5 % en poids.

2. Réceptacle comestible selon la revendication 1 comprenant moins de 10 % en poids de liant.

3. Réceptacle comestible selon l'une quelconque des revendications précédentes, dans lequel le réceptacle contient au moins 60 % en poids de particules de matériau cuit sec en poids du réceptacle.

4. Réceptacle comestible selon l'une quelconque des revendications précédentes, dans lequel les particules de matériau cuit sec présentent un diamètre moyen de 0,01 à 3 mm.

5. Réceptacle comestible selon l'une quelconque des revendications précédentes, dans lequel les particules de matériau cuit sec présentent une teneur en eau d'au plus 4 % en poids en poids des particules.

6. Réceptacle comestible selon l'une quelconque des revendications précédentes, dans lequel le réceptacle comprend jusqu'à 35 % en poids d'un autre matériau comestible particulaire de 1 à 20 mm de dimension.

7. Réceptacle comestible selon l'une quelconque des revendications précédentes, dans lequel l'autre matériau comestible particulaire est choisi parmi des graines, des céréales, des morceaux de fruit, des copeaux de chocolat et des mélanges de ceux-ci.

8. Réceptacle comestible selon l'une quelconque des revendications précédentes, dans lequel le réceptacle comestible est un cône.

9. Réceptacle comestible selon l'une quelconque des revendications précédentes, dans lequel le réceptacle comestible présente une épaisseur de paroi de 1 à 10 mm.

10. Réceptacle comestible selon l'une quelconque des revendications précédentes, dans lequel le réceptacle comestible présente une masse de 5 à 80 g.

11. Procédé de préparation d'un réceptacle comestible selon l'une quelconque des revendications 1 à 10, le procédé comprenant les étapes :
(a) de dosage d'une quantité nécessaire d'ingrédients de réceptacle comestible dans un moule de support, les ingrédients comprenant de 0,01 % en poids à 15 % en poids de liant et au moins 50 % en poids de particules de matériau cuit sec dans lequel les particules présentent un diamètre moyen de 0,001 à 5 mm et une teneur en eau d'au plus 5 % en poids ;
(b) d'insertion d'un outil de façonnage dans les ingrédients dans le moule de support ; et
(c) de vibration de l'outil de façonnage à une fréquence ultrasonique pour façonner les ingrédients en un réceptacle comestible de la forme souhaitée.

12. Procédé selon la revendication 11, dans lequel le réceptacle est congelé rapidement après l'étape (c), de préférence en l'espace de 1 min après l'étape (c).

13. Procédé selon la revendication 11 ou 12, dans lequel le moule de support contient un matériau d'emballage dans lequel les ingrédients de réceptacle comestible sont dosés.

14. Produit de confiserie glacée composite qui comprend un réceptacle comestible selon l'une quelconque des revendications 1 à 10 et une confiserie glacée.

15. Procédé de fabrication d'une confiserie glacée composite selon la revendication 14 dans lequel le procédé comprend la distribution d'une confiserie glacée dans un réceptacle comestible selon l'une quelconque des revendications 1 à 10.
